(19) Europäisches Patentamt

European Patent Office

Office européen des brevets

(11) **EP 0 505 688 B2**

(12) **NEUE EUROPÄISCHE PATENTSCHRIFT**

(45) Veröffentlichungstag und Bekanntmachung des Hinweises auf die Entscheidung über den Einspruch:
**05.02.1997 Patentblatt 1997/06**

(51) Int Cl.$^6$: **F16H 47/04**, F16H 61/46

(45) Hinweis auf die Patenterteilung:
**14.12.1994 Patentblatt 1994/50**

(21) Anmeldenummer: **92101406.4**

(22) Anmeldetag: **29.01.1992**

(54) **Steuerung einer Verdrängermaschine eines hydrostatisch-mechanischen Lastschaltgetriebes**

Control for the positive displacement machine of a hydrostatic-mechanical gearing shiftable under load

Commande de machine à déplacement positif d'une transmission hydrostatique-mécanique manoeuvrable sous charge

(84) Benannte Vertragsstaaten:
**DE FR GB IT NL SE**

(30) Priorität: **26.03.1991 DE 4109884**

(43) Veröffentlichungstag der Anmeldung:
**30.09.1992 Patentblatt 1992/40**

(73) Patentinhaber: **CLAAS Kommanditgesellschaft auf Aktien**
**33428 Harsewinkel (DE)**

(72) Erfinder: **Fredriksen, Nils**
**W-4834 Harsewinkel (DE)**

(56) Entgegenhaltungen:
**EP-A- 0 302 188**  **EP-A- 0 339 202**
**EP-A- 0 365 772**  **EP-A- 0 444 472**
**DE-A- 3 713 799**  **DE-A- 3 926 717**
**US-A- 4 776 233**

**Beschreibung**

Die Erfindung betrifft ein Verfahren zur Steuerung eines hydrostatischen Verstellgetriebes eines hydrostatischmechanisch stufenlos leistungsverzweigten Lastschaltgetriebes bei dem ein Verdrängervolumen jeweils nach dem Einschalten einer Kupplung eines neuen Ganges, ein Leckvolumen bezüglich eines theoretischen Verdrängervolumens berücksichtigend, angesteuert wird, wonach die Kupplung des jeweils noch mitlaufenden, vorher wirksamen Ganges getrennt wird.

Aus der DE-C-38 38 767 ist eine derartige Steuerung einer Verdrängermaschine bekannt, bei der jeweils beim Gangwechsel eine Einstellung des Verdrängervolumens entsprechend dem theoretischen Ölbedarf zuzüglich eines bestimmten Leckageverlustes erfolgt, damit jeweils die auszurückende Kupplung des vorherigen Ganges möglichst drehmomentlos zu schalten ist. Die Bestimmung eines zu berücksichtigenden Leckageverlustes stellt einen sehr ungenauen Kompromiß dar, da die Verdrängermaschine vor und nach den Schaltpunkten aufeinanderfolgender Getriebestufen jeweils entsprechend der Getriebestufe mit einem unterschiedlichen hydraulischen Übertragungsanteil wirksam ist, so daß die hydraulischen Druckverhältnisse und demzufolge das Verhältnis der Leckageverluste demgemäß unterschiedlich groß ist, was unberückischtigt geblieben ist, so daß das beabsichtigte drehmomentarme Ausrükkenden der Kupplungsteile entweder in keinem Fall oder nur bei dem Hoch- oder dem Herunterschalten erreicht wird, was zu Schäden an der Kupplung und dem Getriebe und ruckartigem Betrieb führt.

Es ist Aufgabe der Erfindung, eine Steuerung der Verdrängermaschine zu offenbaren, bei der bei jedem Schaltvorgang eine drehmomentlose Einstellung der auszurückenden Kupplungsteile erreicht wird, sowie eine Steuervorrichtung dazu anzugeben.

Die Lösung der Aufgabe erfolgt durch die im Anspruch 1 enthaltenen Merkmalen. Jeweils aus dem alten Leckvolumen das neue Verdrängervolumen entsprechend unterschiedlicher Hydraulikdruckverhältnisse in dem Verstellgetriebe jeweils vor und nach dem Schaltvorgang bestimmt wird, wobei die Einstellung des neuen Verdrängervolumens bezüglich des theoretischen Verdrängevolumens gemäß einem neuen Leckvolumen erfolgt, das den Hydraulikdruckverhältnissen entsprechend aus dem alten Leckvolumen bestimmt wird.

Bei den bekannten Verdrängermaschinen wird das Verdrängervolumen durch eine Schwenkverstellung eines Widerlagers vorgenommen, die mittels einer proportional wirkenden hydraulischen Verstelleinrichtung elektrisch gesteuert erfolgt. In einem stufenlosen, hydrostatisch leistungsverzweigten Getriebe wird die Verdrängermaschine jeweils vor dem Heraufschalten einer Getriebestufe additiv leistungsübertragend und nach dem Umschalten in den höheren Gang subtraktiv genutzt. In beiden Fällen sind theoretisch synchrone Drehzahlen an den ein- und auszurückenden Kupplungen vorgegeben, damit ein ruckfreies Einschalten der Kupplung des neuen Ganges ebenso wie ein ruckfreies Ausrücken der Kupplung des vorherigen Ganges danach erfolgt. Im praktischen Betrieb ist es nun erforderlich, daß vor dem Einkuppeln des neuen Ganges zur Herstellung des Synchronlaufes an der Kupplung das hydrostatische Getriebe so gesteuert ist, daB auch dessen Leckageverluste gedeckt sind. Da nach dem Einschalten des neuen Ganges wegen der inversen Betriebsweise des Hydraulikgetriebes wieder Leckageverluste bezüglich der kon-stant arbeitenden Verdrängereinheit auftreten, ist es zur Einstellung einer Drehmomentfreiheit an der auszurückenden Kupplung erforderlich, eine korrigierende, diese Verhältnisse berücksichtigende, Umsteuerung des Verdrängervolumens vorzunehmen, wobei die unterschiedlichen Leckageverluste zu berücksichtigen sind. Gemäß der Erfindung wird bei der Bestimmung dieser korrigierenden Einstellung berücksichtigt, daß die Druckverhältnisse und damit die Leckageverluste jeweils abhängig von dem jeweils genutzten Verzweigungsverhältnis im oberen Drehzahlbereich des unteren Ganges und in unteren Drehzahlbereich des oberen Ganges um das Schaltverhältnis verschieden ist. Aus diesem Grund sind die Leckageverluste vor einem Heraufschalten im Synchronzustand der einzuschaltenden Kupplung kleiner als nach dem Heraufschalten bei einer Einstellung zu einer Drehmomentenfreiheit der auszurückenden Kupplung. Bei einem Herunterschalten sind die Verlustverhältnisse umgekehrt. GemäB der Erfindung werden diese Unterschiede der Leckageverluste vor und nach dem Schalten in der Einstellung des Verdrängervolumens berücksichtigt, so daß erst dann ein Auskuppeln vorgenommen wird, wenn kein Drehmoment über die Kupplungsteile übertragen wird.

Um diese Leckagenunterschiede vor und nach dem Einkoppeln und der damit verbundenen Umkehr der Wirkung des hydraulischen Getriebezweiges zu berücksichtigen, wird die Schrägscheibeneinstellung, die das Verdrängervolumen bestimmt, jeweils nicht symmetrisch zur Neutrallage vorgenommen, sondern mit unterschiedlichen Korrekturwinkeln, die an die jeweiligen relativen Leckverluste angepaßt sind und diese ausgleichen.

Die Verhältnisse der Korrekturen der Verdrängereinstellungen ergben sich auf folgende Weise:

1. Die Einstellung beim Hochschalten:

Beim Hochschalten wechselt der Leistungsfluß in der Hydrostatik beim Gangwechsel von additiver Leistung (die Verstelleinheit ist die Pumpe und die Konstanteinheit ist der Motor) zur Blindleistung (die Konstanteinheit ist die Pumpe und die Verstelleinheit ist der Motor). Dabei wechseln der Hoch- und der Niederdruck den beiden Verbindungsleitungen der Einheiten und der Hochdruck steigt theoretisch um den Faktor des Stellverhältnisses der Gänge an.

Der Hochdruck und die Leckölmenge in der Hydrostatikbaugruppe stehen annähernd in einem proportionalen Verhalten zueinander. Es kann daher bei jeder Belastung von einem konstanten Leckölländerungsfaktor k ausgegangen werden.

Daraus ergibt sich, daß nach einem Hochschalten zur Erfüllung der gestellten Bedingung die Einstellung so sein muß, daß das neue Verdrängervolumen gleich dem theoretischen Verdrängervolumen erhöht um dessen Produkt mit dem Leckölländerungsfaktor abzüglich des alten Verdrängervolumens multipliziert mit dem Leckölländrungsfaktors, d.i. die Formel

$$(1) \qquad V_{neu} = V_{th} + V_{th} \times k - V_{alt} \times k.$$

2. Die Verhältnisse beim Herunterschalten:

Beim Herunterschalten wechselt der Leistungsfluß in der Hydrostatikbaugruppe beim Gangwechsel von Blindleistung zu additiver Leistung. Dabei wechselt der Hochdruck und der Niederdruck in den Verbindungsleitungen der Hydraulikeinheiten, und der Hochdruck sinkt theoretisch um den Faktor des Stellverhältnisses der Gänge. Wegen der annähernden Proportionalität zwischen dem Druck und dem Leckölverlust in der Hydrostatikbaugruppe kann auch hier von dem konstanten Leckölländerungsfaktor k ausgegangen werden.

Daraus ergibt sich, da nach dem Herunterschalten zur Erfüllung der gestellten Bedingung die Einstellung so sein muß, daß das neue Verdrängervolumen gleich dem theoretischen Verdrängervolumen erhöht um dessen Quotienten mit dem Leckölländerungsfaktor abzüglich des Quotienten des alten Verdrängungsvolumens mit dem Leckölländerungsfaktor, d.i. die Formel:

$$(2) \qquad V_{neu}' = V_{th} + V_{th}/k - V_{alt}'/k.$$

Der Leckölländerungsfaktor kann experimentell gewonnen werden. Er ist prinzipiell größer 1. Er liegt gewöhnlich zwischen 1,5 und 2,5. In einem Getriebe mit einem Stellverhältnis von 1,66 wurde k = 2 als praktisch brauchbar ermittelt.

Zur Einstellung des Verdrängervolumens wird ein Regelkreis verwendet, dem ein Stellungssignal der Stellvorrichtung als Ist-Signal zugeführt wird. Weiterhin ist vorgesehen, daß in bekannter Weise Drehzahlsignale von den An- und Abtriebswellen der hydrostatischen Getriebeeinheit abgenommen werden. Dadurch läßt sich durch Beachtung der jeweils für die einzelnen Gänge bekannten Drehzahlverhältnis-se erreichen, daß das Einkuppeln des nächten gewünschten Ganges bei einer Synchronität an der Kupplung erfolgt. Hierbei wird das jeweilige alte Ist-Stellungssignal gewonnen, dessen Größe sich aus dem theoretischen Verdängervolumen und dem alten Leckölverlust ergibt. Zusammen mit dem theoretischen Ist -Stellungssignal wird nun ein der Regelung vorzugebendes neues Soll-Stellungssignal so gebildet wird, daß die neuen Leckölverluste berücksichtigt sind, Wenn danach der so eingeleitete Regelvorgang abgeschlossen ist, wird die Kupplung des früheren Ganges ausgerückt und nun der Gang weiter durchlaufen, indem das Verdrängervolumen weiter verändert vorgegeben wird.

In der Praxis ist es nicht erforderlich, die theoretisch verlustfreie Stellung zu kennen, da die Ist-Stellungssignale, die beim Hochschalten und die beim Herunterschalten bei den Synchronzuständen gewonnen werden und zum Einkuppeln dienen, und deren Werte gespeichert werden, jeweils auch die Ist-Stellungen für das Entkuppeln der gleichen Kupplung sind, soweit die gleichen Lastverhältnisse vorliegen. Die Berücksichtigung von Änderungen der Leckverhältnisse im laufenden Betrieb wird dadurch erreicht, daß eine etwaige Differenzen eines im Synchronfall neu gewonnenen IstSignales zu dem entsprechenden früher gewonnenen Ist-Signal stets ermittelt wird und daraus unmittelbar mit einem Umrechnungsfaktor der Abstand des optimalen neuen Soll-Signals zum alten Soll-Signal errechnet wird.

Diese Steuerung erbringt auch eine Anpassung an die sich mit dem laufenden Betrieb verändernden Leckverhalten der Vorrichtung, das der Temperatur des Hydrauliköles und der Stelleinheit abhängig ist und sich mit der Last ändert. Die Bestimmung der Leckölverluste zu Beginn jedes Schaltvorganges und die Vorausberechnung der Verluste nach dem Vorgang und deren Berücksichtigung bei der Sollwertbestimmung schließt automatisch alle laufenden Änderungen der Betriebsverhältnisse ein.

Eine vorteilhafte Ausgestaltung eines Getriebes mit der Stellvorrichtung, die eine erfindungsgemäße Einstellung und Kupplungsbetätigung vornimmt, zeigen Fig. 1 bis 3.

Fig. 1  zeigt ein Mehrganggetriebeschema;
Fig. 2  zeigt die hydrostatischen Leistungsanteile des Getriebes;
Fig. 3  zeigt die hydrostatischen Druckverhältnisse des Getriebes;
Fig. 4  zeigt ein Hochschalt-Einstelldiagramm;
Fig. 5  zeigt ein Herunterschalt-Einstelldiagramm.

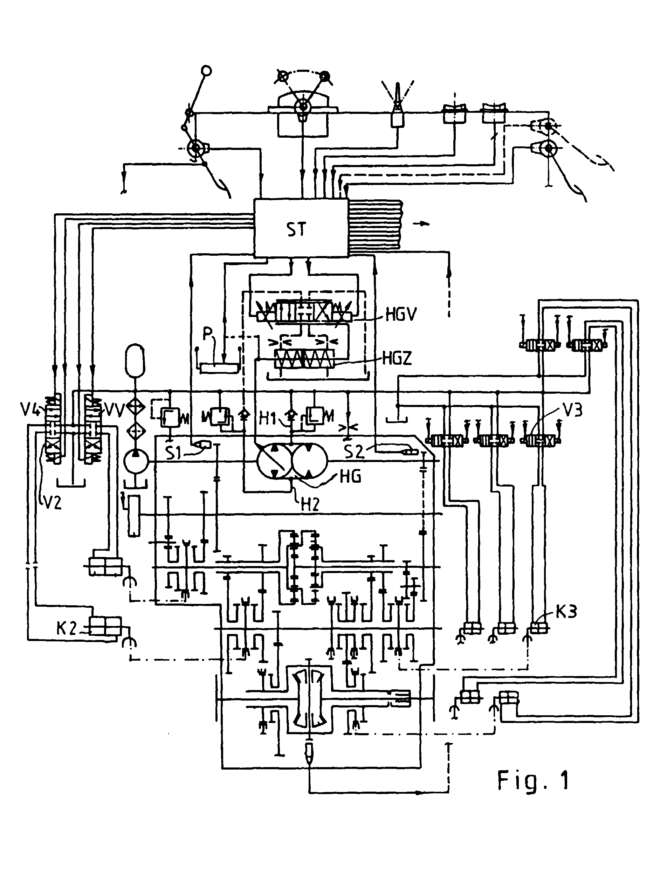

Fig. 1 zeigt ein hydrostatisch-mechanisch leistungsverzweigtes Lastschaltgetriebe, dessen hydrostatischer Zweig aus dem hydrostatischen Stellgetriebe (HG) besteht. Dieses wird durch eine elektronische Steuervorrichtung (ST) gesteuert, indem diese über ein elektrisch-hydraulisches Steuerventilpaar (HGV) einen stellungsproportional wirkenden Hydraulik-Steuerzylinder (HGZ) betätigt, so daß dieser den Stellwinkel und damit das Verdrängervolumen des Hydraulikstellgetriebes (HG) bestimmt.

Beispielsweise wird zum Heraufschalten vom 2. in den 3. Gang bei einem vorgegebenen Drehzahlverhältnis an der Ein- und der Ausgangswelle des Hydrostatikwandlers (HG), das Vorhandensein dieses Drehzahlverhältnisses aus den Signalen der Drehzahlsensoren (S1 , S2) in der elektronischen Steuervorrichtung (ST) ermitteltwird, von der Steuervorrichtung (ST) das elektrohydraulische Dritte-Gang-Ventil (V3) betätigt, das die 3.-Gang-Kupplung (K3) hydraulisch einrücken läßt, wobei das ermittelte Drehzahlverhältnis sicherstellt, daß die Getriebeteile der Kupplung (K3) des dritten Ganges vor dem Kuppeln synchron umlaufen. Dann wird von der Steuervorrichtung (ST) über das elektrohydraulische Steuerventil (HGV) das Proportionalsteuerventil (HGZ) so beaufschlagt, daß dieses den neuen Leckageverlusten gemäß korrigierend verstellt wird, so daß an den mitlaufenden Kupplungsklauen der Kupplung (K2) des zweiten Ganggetriebes kein Drehmoment übertragen wird. Dann wird von der Steuervorrichtung (ST) das Zweite-Gang-Ventil (V2) abgeschaltet und dadurch die Zweite-Gang-Kupplung (K2) hydraulisch rucklos ausgerückt, indem das zugehörige steuerbare Ventil (V2) abgeschaltet wird.

Zum Herunterschalten vom dritten Gang in den zweiten Gang werden die Vorgänge der Synchronisation an der zu schließenden Kupplung, des Einkuppels des neuen Ganges, der Kupplungsentlastung und des Ausrückens der Kupplung des vorherigen Ganges in umgekehrter Reihefolge ausgeführt, wobei jedoch zu beachten ist, daß der beim Herunterschalten eine Verstellung des Verdrängervolumens über das alte Verdrängervolumen, das beim Einkuppeln herrschte, hinaus erfolgen muß, wonach das Entkuppeln und dann erst das anschließende Reduzieren des Verdrängervolumens erfolgt. Entsprechende Schaltvorgänge finden bei anderen Gangwechseln statt.

Der Unterschied der Leckagen in den beiden Verdrängereinheiten (HG) und den an den Hydraulikleitungen (H1, H2) angeschlossenen Verbrauchern ergibt sich aus den Druckunterschieden vor und nach den Schaltvorgängen.

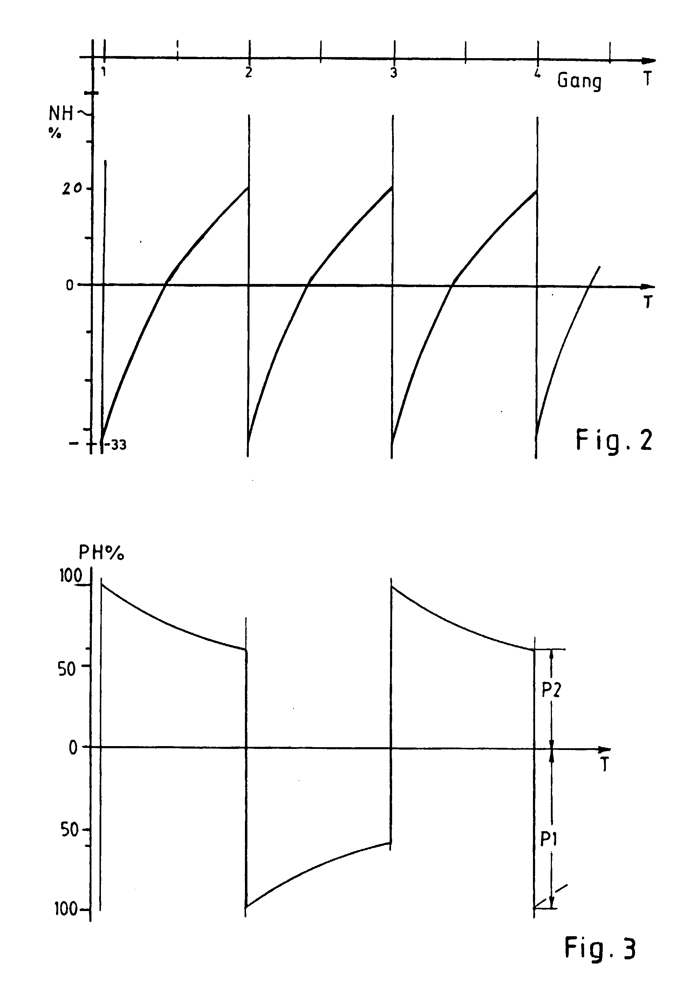

Diese Druckunterschiede in den Hydraulikleitungen folgen aus dem jeweiligen hydrostatischen Leistungsanteil der übertragenen Leistung im hyraulischen Getriebezweig. Dieser Leistungsanteil (NH) ist in Fig. 2 über dem Transmissionsverhältnis (T) für die unteren Gänge des Getriebes aufgezeichnet. Da das hier vorgesehene Einstellverhältnis 1 : 1 ,66 beträgt, ergibt sich ein hydrostatisch übertragener Anteil von minus 33% bzw. von 20%, jenachdem ob die Getriebestufe im unteren oder im oberen Drehzahlbereich betrieben ist.

Fig. 3 zeigt die Druckverhältnisse im hydrostatischen Zweig. Betragsmäßig verhalten sich die Drücke (P1) und (P2) beiderseits des Schaltpunktes zueinander wie das Stellverhältnis.

Die jeweils zu den Einschalt- bzw. Ausschaltzeitpunkten der Kupplungen (K2, K3) - s. Fig.1 - vorgegebenen Einstellungen des Proportionalstellzylinders (HGZ), die die unterschiedlichen Leckagen berücksichtigen, werden durch eine geeignete Beaufschlagung jeweils eines der beiden konträr wirkenden Stellventile der elektro-hydraulischen Ventileinheit (HGV) von der Steuervorrichtung (ST) bewirkt.

Zur genauen Einstellbarkeit der Proportional-ventileinheit (HGV) ist dieses mit einem vorgebbaren Strom von der Steuervorrichtung (ST) gespeist. Dieser Strom wird vorzugsweise durch einen Stromsensor (IS) an die Steuervorrichtung (ST) rückgemeldet, so daß die jeweils bei Vorliegen von Synchronverhältnissen an einer zu schließenden Kupplung gemeldete Stromstärke wegen der Proportionalität dort als Wert des Stellungssignals gespeichert und als Vorgabegröße später ausgewertet werden kann.

In einer anderen Ausgestaltung der Vorrichtung ist zur genauen Einstellbarkeit das MaB der Verstellung des Proportionalstellzylinders (HGZ) mittels eines Positionsmelders, z.B. eines Potentiometers (P) schleiferseitig, an die Steuervorrichtung (ST) rückgekoppelt, so daß diese mittels eines Reglerprogrammes jeweils eine genaue Einstellung auf das vorgegebene optimale Verdrängervolumen vornimmt.

Die Stellungssignale des Positionsmelders (P), die jeweils bei dem Synchronlauf der Kupplungsteile vor dem Hoch- und vor dem Herunterschalten abgenommen werden, dienen zur Ermittlung der Stellung, die im jeweils anderen Fall zur Entlastung der auszurückenden Kupplung anzusteuern sind und die dann durch die Regelung eingestellt werden.

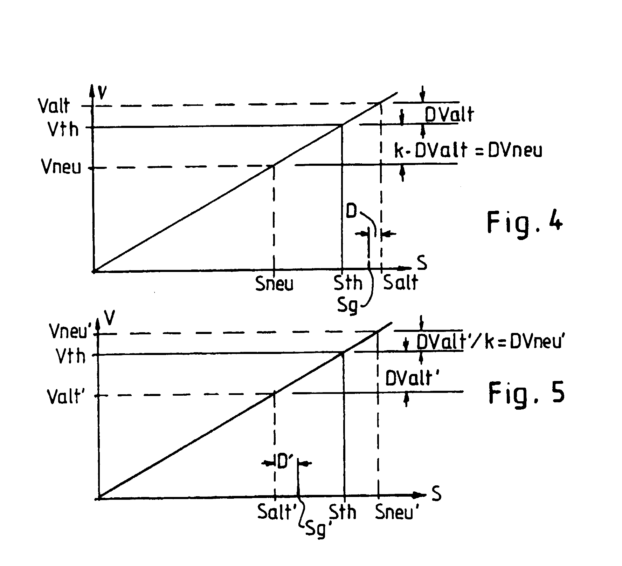

In Fig. 4 ist schematisch, d.h. im Schaltbereich vergrößert, die Abhängigkeit des Verdrängervolumens und der zugehörigen Stellungen der Steuermittel des Verdrängervolumens beim Hochschalten dargestellt. Das alte Verdrängervolumen (Valt) ist um das Leckvolumen (DValt) größer als das theoretische Verdrängervolumen (Vth). Das neue Verdrängervolumen (Vneu), bei dem das alte Gangge-triebe lastfrei ist, ist um eine, um den Leckvolumenfaktor (k) größere Leckvolumendifferenz (DValt x k) kleiner als das theoretische Verdrängervolumen (Vth). Demgemäß sind die alte und die neue Einstellung (Salt, Sneu) um einen kleineren bzw. einen größeren Betrag höher bzw. niedriger als die theoretische Stellung (Sth). Hierbei ist der Leckvolumenfaktor prinzipiell größer 1, da im alten und im neuen Zustand andere Druckverhältnisse herrschen, die zu den Unterschieden führen. Wie man sieht, ergibt sich so die Formel (1).

In Fig. 5 ist schematisch, vergrößert im Kupp-lungsstellbereich, die Abhängigkeit des Verdrängervolumens und der zugehörigen Stellungen der Verdrängersteuermittel beim Herunterschalten gezeigt. Es ist ersichtlich, daß das alte Verdrängervolumen (Valt') um ein größeres Verlustvolumen (DValt') unter dem theoretsichen Verdrängervolumen (Vth) liegt als das neue Verdrängervolumen (Vneu') nach dem Herunterschalten, das zur Lastfreiheit des alten Ganggetriebes erforderlich ist, und über dem theoretischen Verdrängervolumen (Vth) liegt. Dieser Leckverlust (DVneu') ergibt sich als Quotient aus dem alten Leckverlust (DValt') und dem Leckvolumenfaktor (k). Wie man sieht, ergibt sich so die Formel (2). Durch den angenommenen linearen Zusammenhang der Stellungen der Steuermittel zu den Volumina ergibt sich die dargestellte Abhängigkeit der alten und der neuen Stellung (Salt' , Sneu') beim Herunterschalten in ihrer Lage zur theoretsichen Stellung (Sth).

Wie man aus der Darstellung erkennt, ist die Stellung (Sneu'), bei der das ruckfreie Auskuppeln erfolgt, weiter ausgesteuert als die Kupplungsschließstellung (Salt'). Erst nach der weiteren Aussteuerung erfolgt also die Rückführung der Steuerung auf die entgegengesetzte Stellung hin, sofern der Antrieb weiter übersetzt werden soll.

Da sich die Leckverhältnisse im Betrieb, also bei unterschiedlicher Last, z.B. bei Zug- oder bei Schubbetrieb, d.h. bei einer Bremsung, und mit der Temperatur ändern können, ist es vorteilhaft, wenn die jeweiligen Werte des Stellungsensorsignales (Salt, Salt'), die jeweils im Synchronfall bei nur einer eingeschalteten Kupplung vorliegen, als die der Einstellregelung vorzugebenden Stellungssollsignale gespeichert werden, so daß das Signal (Salt) des Hochschaltens als das Soll-Signal (Sneu') beim Herunterschalten und das Signal (Salt') beim Herunterschalten als das Sollsignal (Sneu) beim Hochschalten dient.

Eine noch weitergehend sich verändernden Verhältnisse adaptierende Sollsignalvorgabe wird dann erreicht, wenn jeweils eine ermittelte Synchronstellung (Salt, Salt') mit der entsprechenden gespeicherten vorherigen Synchronstellung (Sg, Sg') in Beziehung gesetzt wird und mittels des Zusammenhanges über den Leckvolumenfaktor k die zugehörige neue Entkupplungsstellung (Sneu, Sneu') aus der gespeicherten Entkupplungsstellung (Sg, Sg') errechnet wird.

Beim Hochschalten sei ein Differenz (D) des gespeicherten Wertes (Sg) zum neu ermittelten Stellungswert (Salt) festgestellt worden, so ergibt sich aus dem beim letzten Herunterschalten gespeicherten Stellungswert (Sg') mit dem Leckvolumenfaktor k der neue Stellung-Sollwert (Sneu) für das Entkuppeln beim Hochschalten zu:

$$Sg' + D \cdot k = Salt' = Sneu; \quad D = Sg - Salt. - \quad (3)$$

Entsprechend ergibt sich beim Herunterschalten für eine festgestellte Differenz D':

$$Sg + D'/k = Salt = Sneu'; \quad D' = Sg' - Salt - \quad (4)$$

als Formel (4).

## Patentansprüche

1. Vorrichtung zur Steuerung eines hydrostatischen Verstellgetriebes (HG) eines hydrostatisch-mechanisch stufenlos leistungsverzweigten Lastschaltgetriebes bei dem ein Verdrängervolumen (Vneu, Vneu') jeweils nach dem Einschalten einer Kupplung (K2, K3) eines neuen Ganges, ein Leckvolumen (DValt, DValt') bezüglich eines theoretischen Verdrängervolumens (Vth) berücksichtigend, angesteuert wird, wonach die Kupplung (K3, K2) des jeweils noch mitlaufenden, vorher wirksamen Ganges getrennt wird, wobei, jeweils aus dem alten Leckvolumen (DValt, DValt') das neue Verdrängervolumen (Vneu, Vneu') entsprechend unterschiedlicher Hydraulikdruckverhältnisse in dem Verstellgetriebe (HG) jeweils vor und nach dem Schaltvorgang bestimmt wird, wobei die Einstellung des neuen Verdrängervolumens (Vneu, Vneu') bezüglich des theoretischen Verdrängervolumens (Vth) gemäß einem neuen Leckvolumen (DVneu, DVneu') erfolgt, das den Hydraulikdruckverhältnissen entsprechend aus dem alten Leckvolumen (DValt, DValt') bestimmt wird, wobei das Verstellgetriebe (HG) mit einem Proportionalventil (HGV) gesteuert verbunden ist, das von einem elektrohydraulischen Steuerventilsatz beaufschlagt ist, das elektrisch von einer elektronischen Steuervorrichtung (ST) beaufschlagt ist, die mittels eines Steuerprogrammes verfahrensgemäß den Steuerventilsatz und die Kupplungen (K2, K3) mittels elektro-hydraulischer Ventile (V3, V2) ansteuert, wobei das Proportionalventil (HGV) von der Steuervorrichtung (ST) mit einem vorgebbaren Strom beaufschlagt ist, proportional zu dem dieses jeweils eingestellt ist oder an dem Proportionalventil (HGV) oder an dem Verstell-getriebe (HG) ein Stellungssensor (P) angeordnet ist, dessen Stellungssignal der Steuervorrichtung (ST) zugeführt ist, das als ein Rückkoppelsignal in einer Regelschleife jeweils zur Einstellung des verfahrensgemäß bestimmten Verdrängervolumens dient, und wobei an der Ein- und Ausgangswelle des Verstellgetriebes (HG) Tachometersensoren (S1, S2) angeordnet sind, deren Signale der Steuervorrichtung (ST) jeweils zur Ermittlung eines Synchronzustandes an einer zu schließenden Kupplung (K2, K3) überwacht werden, bei dem jeweils ein Wert (Sg, Sg') des zugehörigen Strom- oder Potentiometer-Stellungssignals (Salt, Salt') gespeichert wird und als das vorzugebende neue Soll-Stellungssignal (Sneu', Sneu) bei dem jeweils umgekehrten Schaltvorgang, d.h. bei der Trennung der gleichen Kupplung (K2, K3) direkt oder mittelbar dient.

2. Vorrichtung nach Anspruch 1, dadurch gekennzeichnet, daß im Synchronzustand das jeweils ermittelte Stellungssignal (Salt, Salt') von dem bis dahin gespeicherten zugehörigen Wert (Sg, Sg') subtrahiert wird und aus der so gebildeten Differenz (D, D') die neue Soll-Stellung (Sneu', Sneu) unter Berücksichtigung des Leckvolumenfaktors (k) aus dem jeweils gespeicherten anderen Wert (Sg', Sg) errechnet wird.

## Claims

1. A device for controlling a hydrostatic adjusting transmission (HG) of a hydrostatic-mechanically continuously variably power-split load-shift transmission, wherein a displacement volume (Vneu, Vneu') is activated each time after a clutch (K2, K3) of a new gear is engaged, taking into consideration a leakage volume (DValt, DValt') in respect of a theoretical displacement volume (Vth), whereupon the clutch (K3, K2) of the respectively still also operating, previously active gear is disengaged, wherein from each respective old leakage volume (DValt, DValt') the new displacement volume (Vneu, Vneu') is determined before and after the shift operation in accordance with varying hydraulic pressure relationships in the adjusting transmission (HG), the new displacement volume (Vneu, Vneu') being set in relation to the theoretical displacement volume (Vth) in accordance with a new leakage volume (DVneu, DVneu') which is determined from the old leakage volume (DValt, DValt') in accordance with the hydraulic pressure relationships, wherein the adjusting transmission (HG) is controlledly connected to a proportional valve (HGV) which is acted upon by an electro-hydraulic control valve set which is electrically acted upon by an electronic control device (ST) which by means of a control program actuates in accordance with the process the control valve set and the clutches (K2, K3) by means of electro-hydraulic valves (V3, V2), wherein the proportional valve (HGV) is acted upon by the control device (ST) with a predeterminable current, in proportion to which said valve is respectively set, or arranged at the proportional valve (HGV) or on the adjusting transmission (HG) is a position sensor (P) whose position signal is fed to the control device (ST), which signal respectively serves as a feedback signal in a closed control loop for setting the displacement volume which is determined in accordance with the process, and wherein tachometer sensors (S1, S2) are arranged at the input and output shafts of the adjusting transmission (HG), the signals from the sensors being respectively monitored at the control device (ST) to detect a synchronous condition at a clutch (K2, K3) to be closed, in relation to which a respective value (Sg, Sg') of the associated current or potentiometer position signal (Salt, Salt') is stored and serves directly or indirectly as the new reference position signal (Sneu', Sneu) to be predetermined, in the respective reverse shift operation, that is to say upon disengagement of the same clutch (K2, K3).

2. A device according to claim 1 characterised in that in the synchronous condition the respectively ascertained position signal (Salt, Salt') is subtracted from the associated value (Sg, Sg') stored hitherto and the new reference position (Sneu', Sneu) is calculated from the difference (D, D') formed in that way, taking into account the leakage volume factor (k), from the respectively stored other value (Sg', Sg).

## Revendications

1. Dispositif de commande d'un engrenage de réglage hydrostatique (HG) d'une transmission hydrostaticomécanique à réglage continu avec division de puissance et manoeuvrable sous charge, dans le cadre duquel un volume de déplacement (Vneu, Vneu') est amorcé après chaque couplage d'un embrayage (K2, K3) d'une nouvelle vitesse et compte tenu d'un volume de fuite (DValt, DValt') se rapportant à un volume de déplacement théorique (Vth), ce après quoi l'embrayage (K3, K2) de la vitesse précédente, encore coactive, est désaccouplé, dans lequel

le nouveau volume de déplacement (Vneu, Vneu') est déterminé, avant et après chaque opération de couplage, à partir de l'ancien volume de fuite respectif (DValt, DValt'), conformément aux différentes conditions de pression hydraulique dans l'engrenage de réglage (HG), le réglage du nouveau volume de déplacement (Vneu, Vneu') se rapportant au volume de déplacement théorique (Vth) étant effectué selon un nouveau volume de fuite (DVneu, DVneu'), qui est déterminé sur la base de l'ancien volume de fuite (DValt, DValt') en fonction des conditions de pression hydraulique, moyennant quoi l'engrenage de réglage (HG) est raccordé, commandé, à une soupape proportionnelle (HGV), qui est soumise à l'action d'un jeu de soupapes de commande électro-hydrauliques, soumis à l'action d'un dispositif de commande électronique (ST), qui excite, par programme de commande, conformément au procédé, le jeu de soupapes de commande et les embrayages (K2, K3) à l'aide de soupapes électro-hydrauliques (V3, V2), moyennant quoi la soupape proportionnelle (HGV) est soumise, par le dispositif de commande (ST) à un courant prédéterminable, proportionnellement auquel elle est, chaque fois, réglée ou qu'un détecteur de position (P) est coordonné à la soupape proportionnelle (HGV) ou à l'engrenage de réglage (HG), le signal de position de ce détecteur étant conduit au dispositif de commande (ST) et servant, sous forme de signal de rétroactif, au réglage du volume de déplacement déterminé conformément au procédé, et moyennant quoi l'arbre d'entrée et l'arbre de sortie sont équipés de détecteurs tachométriques (S1, S2), dont les signaux, lancés au dispositif de commande (ST) sont contrôlés chacun aux fins de détection d'un état de synchronisation à un embrayage (K2, K3) à fermer, une valeur respective (as, as') du signal de position courant ou potentiomètre (Salt, Salt') afférent étant mémorisée et servant, directement ou indirectement, de nouveau signal de position de consigne (Sneu', Sneu) lors de chaque renversement de vitesse, c'est-à-dire lors de la séparation du même embrayage (K2, K3).

2. Dispositif selon la revendication 1, caractérisé en ce qu'à l'état de synchronisation, le signal de position respectif (Salt, Salt') est soustrait de la valeur afférente (Sg, Sg'), mémorisée jusqu'à présent, et que la nouvelle position de consigne (Sneu', Sneu) est calculée à partir de la différence (D, D') ainsi obtenue, compte tenu du facteur de volume de fuite (k), en provenance de l'autre valeur (Sg', Sg) respectivement mémorisée.

Fig. 1

Fig. 2

Fig. 3

Fig. 4

Fig. 5